# EUROPÄISCHE PATENTSCHRIFT

(11) **EP 1 753 574 B1**
(45) Veröffentlichungstag und Bekanntmachung des Hinweises auf die Patenterteilung: **07.11.2007**
(21) Anmeldenummer: 05754728.3
(22) Anmeldetag: 25.05.2005
(51) Int. Cl.: B23B 51/02

(54) **SPIRALBOHRER**
TWIST DRILL
FORET HELICOICAL

(30) Priorität: 27.05.2004 DE 102004026014
(43) Veröffentlichungstag der Anmeldung: 21.02.2007
(73) Patentinhaber: Horst Miebach GmbH, 51789 Lindlar (DE)
(72) Erfinder: MIEBACH, Jürgen, 51789 Lindlar (DE)
(74) Vertreter: Lippert, Hans-Joachim
(86) Internationale Anmeldenummer: PCT/DE2005/000964
(87) Internationale Veröffentlichungsnummer: WO 2005/115668

(56) Entgegenhaltungen:
- US-A- 4 529 341
- US-A- 5 288 183
- PATENT ABSTRACTS OF JAPAN Bd. 014, Nr. 556 (M-1057), 11. Dezember 1990 (1990-12-11) -& JP 02 237709 A (MITSUBISHI HEAVY IND LTD; others: 01), 20. September 1990 (1990-09-20)

## Beschreibung

Die Erfindung betrifft einen Spiralbohrer, insbesondere für weiche Werkstoffe wie Holz, Kunststoff, weiche Metalle, Verbundwerkstoffe und dergleichen, mit einem länglichen Bohrkörper, der ein Anschlussende zum Beispiel zum Befestigen des Spiralbohrers im Spannfutter einer Bohrmaschine, ein Mittelteil und ein Arbeitsende mit einer Zentrierspitze sowie mindestens zwei etwa quer zur Längsachse des Bohrkörpers und bezüglich der Längsachse einander gegenüber liegend verlaufende Hauptschneiden aufweist, wobei die Hauptschneiden jeweils mit einer radial außenliegenden Spitze versehen sind, die in Vorschubrichtung des Spiralbohrers vorsteht, sich an jede Hauptschneide eine Spanauswurfnut anschließt, die wendelförmig um die Längsachse des Bohrkörpers über zumindest einen Abschnitt des Mittelteils verläuft, die Zentrierspitze mindestens zwei Vorschneiden aufweist und die Vorschneiden vom freien Ende der Zentrierspitze ausgehen und etwa quer zur Längsachse des Bohrkörpers sowie bezüglich der Längsachse einander gegenüber liegend verlaufen.

Beispielsweise bei bekannten Holzspiralbohrern tritt beim Durchbohren durch ein Werkstück, das insbesondere aus einem verhältnismäßig weichen Werkstoff wie Holz, Kunststoff, weichem Metall und dergleichen besteht und/oder aus Schichten wie bei einem Verbundwerkstoff oder einem beschichteten Werkstoff aufgebaut ist, das Problem auf, dass an den Rändern der Bohrlöcher sowohl an der Eintrittsseite als auch an der Austrittsseite Aussplitterungen, Ausreißungen, Abplatzungen oder dergleichen auftreten können, die häufig zur Zerstörung der gesamten Bohrlochränder führen können. Diese Fehler können im erhöhten Maße bei Werkstücken aus Presswerkstoffen, wie Pressspanplatten oder Presspappen, die infolge des Pressvorganges eine Verformungsanisotropie mit einer Schichtung parallel zur Pressfläche aufweisen und somit leichter ausbrechen oder abplatzen können, Verbundwerkstoffen und/oder aus beschichteten Werkstoffen beobachtet werden. Zudem fördern die in der industriellen Fertigung üblichen hohen Vorschubgeschwindigkeiten und -Kräfte das Auftreten und das Ausmaß dieser Fehler.

Ein Fortschritt kann durch die radial außenliegenden Spitzen erzielt werden, die das Bohrloch umfänglich quasi anreißen und das Aussplittern an der Eintrittsseite zumindest vermindern. Ein derartiger Bohrer wird in der JP 02 237709 A (Patent Abtracts Of Japan, Bd. 014, Nr.556 (M-1057), 11. Dezember 1990) und der US4,529,341 beschrieben.

Dieser Fehlerneigung wird versucht konstruktiv weiter dadurch zu begegnen, dass Spitzen der Hauptschneiden zu äußeren Vorschneidern mit einer umfänglich verlaufenden Schneidkante ausgebildet sind. Diese Vorschneider schneiden sich an der Eintrittsseite des Bohrloches in die Oberfläche umfänglich ein, um zu verhindern, dass die an dieser Stelle durchtrennten Holzfasern nicht radial nach außen über diesen Schnitt hinaus abgelöst werden, wodurch in die Bohrlochumgebung eine zufriedenstellende Splitterfreiheit an der Eintrittsseite erzielt werden kann.

Ein weiterer Fortschritt wird dadurch erzielt, indem die Zentrierspitze mindestens zwei Vorschneiden aufweist und die Vorschneiden vom freien Ende der Zentrierspitze ausgehen und etwa quer zur Längsachse des Bohrkörpers sowie bezüglich der Längsachse einander gegenüber liegend verlaufen, wie es in den beiden bereits genannten Druckschriften JP 02 237709 A und US4,529,341 sowie weiterhin in der EP 0 137 898 A1 und US005288183A offenbart wird. Somit kann das wegzuschneidende Material von der Mitte des Bohrlochgrundes aus weggeschnitten werden. Hierdurch wird bereits mit Eintritt der Zentrierspitze unter gleichzeitigem Zentrieren des Bohrers eine Art Vorbohrung eingebracht, die entsprechend der Geometrie der Zentrierspitze kleiner als die durch die Hauptschneiden eingebrachte ist.

An der Austrittsseite kann aber weiterhin leicht ein Absplittern, Ausreißen, Abplatzen oder dergleichen der Bohrränder auftreten. Zur Vermeidung dessen werden üblicherweise umständliche und aufwendige Hilfsmaßnahmen angewendet, indem das Werkstück beispielsweise beim Durchbohren mit einer Unterlage unterlegt wird, die auf die Austrittsseite einen Gegendruck zum Bohrdruck in dem Bohrloch erzeugt und in die der Spiralbohrer hineinläuft. In einer anderen üblichen Hilfsmaßnahme wird die Bohrung umständlich und aufwendig in einem zusätzlichen Arbeitsschritt von beiden Seiten her in das Werkstück eingebracht, sodass das Bohrloch damit praktisch zwei Eintrittsseiten und keine Austrittsseite aufweist.

Aufgabe der Erfindung ist daher, einen Spiralbohrer der eingangs genannten Art bereitzustellen, der ohne zusätzliche Hilfsmaßnahmen eine Durchbohrung eines Werkstückes ohne Auftreten oben beschriebenen Fehlererscheinungen erlaubt.

Erfindungsgemäß wird diese Aufgabe dadurch gelöst, dass die Vorschneiden jeweils mit einer radial außenliegenden Spitze versehen sind, die in Vorschubrichtung des Spiralbohrers vorsteht, und dass sich an jede Vorschneide eine Vorspanauswurfnut anschließt, die in die Spanauswurfnut übergeht.

Durch die radial außen liegenden Spitzen der Vorschneiden kann ein leichteres Eingreifen der Vorschneiden in den Werkstoff erzielt werden, indem die Spitzen der Vorschneiden einen Span, der durch die Vorschneiden abzuschneiden ist, gerade abschnitten wird oder bereits geschnitten ist, entlang eines durch die Spitzen bei dem Bohrvorgang beschriebenen Umfangkreises von dem übrigen Werkstoff abtrennen. Somit wird kein Span erzeugt, der sich in seiner Breite über den Radius der Bohrung erstreckt, sondern es können zwei Späne, ein durch die Vorschneide erzeugter und durch die Spitzen der Vorschneiden abgetrennter Span und ein durch die Hauptschneide erzeugter Span, abgeschnitten werden, die, da sie einzeln weniger Volumen als ein üblicher Span aufweisen, leichter vom Bohrungsgrund weg aus dem Bohrloch transportierbar sind. Abhängig von der Größe des Durchmessers des Spiralbohrers sowie von der Art des bohrenden Werkstoffes können die Spitzen wenige Zehntel oder mehr in Vorschubrichtung vorstehen. Die durch die Vorschneiden erzeugten Späne können über die Vorspanauswurfnut in die Spanauswurfnut von der Vorbohrung wegtransportiert werden.

In einem üblichen Spiralbohrer ist die Zentrierspitze funktionsbedingt in Vorschubrichtung vor den Hauptschneiden angeordnet, sodass das wegzuschneidende Material im Bohrloch erst mit Erreichen der Hauptschneiden geschnitten und über die Spanauswurfnut wegtransportiert wird. Hierdurch wird bei einem üblichen Spiralbohrer das Material im Bereich zwischen Zentrierspitze und Hauptschneiden beim Vorschub lediglich nach vorn gedrückt, sodass ein hoher Bohrdruck entstehen kann. Kurz bevor ein Spiralbohrer die Austrittsseite erreicht, wird die verbleibende Wandung zwischen Austrittsseite und aktuellem Bohrlochgrund so gering, dass die Wandung, abhängig vom auf die Wandung einwirkenden Bohrdruck sowie vom verwendeten Werkstoff des Werkstücks, bei einer bestimmten Stärke ausbrechen kann. Dieser Effekt kann beispielsweise verstärkt bei Presswerkstoffen, Verbundwerkstoffen und beschichteten Werkstoffen wegen ihres oben erläuterten geschichteten Aufbaus oder bei Werftstoffen mit fasrigem Aufbau wie Holz oder Faserverbundwerkstoffen auftreten. Durch die außenliegenden Spitzen der Vorschneiden können die Fasern getrennt werden, wodurch eine möglichst splitterfreie Bohrung erzielbar ist. Durch die eingangs beschriebenen Vorschneiden kann der Bohrdruck vermindert werden. Indem einzelne durch die radial außenliegenden Spitzen vom übrigen Span abgetrennte Späne erzeugt werden, kann der Bohrdruck weiter entscheidend abgesenkt werden. Durch die Vorspanauswurfnut können diese Späne in die Spanauswurfnut von der Vorbohrung wegtransportiert werden. Entsprechend wird der durch die Hauptschneiden aufgebaute Bohrdruck vermindert, da er in die Vorbohrung hinein entspannen kann. Die Verminderung des Bohrdruckes insgesamt bewirkt, dass auf der Eintrittsseite wie auf der Austrittsseite des Bohrloches Aussplitterungen, Ausreißungen, Abplatzungen oder dergleichen vermieden werden können.

Wenn es mit dem Durchtritt der Zentrierspitze durch die Austrittsseite noch eventuell zu minimalen Ausreißungen und dergleichen kommen sollte, können diese durch die nachfolgenden Hauptschneiden weggenommen werden.

Bevorzugt sind zwei Hauptschneiden und zwei Vorschneiden vorgesehen, wobei die Hauptschneiden in einem Drehwinkel von 180° zueinander und die Vorschneiden in einem Drehwinkel von 180° zueinander versetzt angeordnet sind. Ausdrücklich eingeschlossen im Bereich der Erfindung sind auch mehrgängige, wie zum Beispiel dreigängige Bohrer, bei denen die Haupt- und Vorschneiden entsprechend ihrer Anzahl gleichmäßig über den Drehwinkel, d.h. bei einem dreigängigen Bohrer über einen Drehwinkel von 120°, verteilt sind. Ferner sind links- oder rechtsgängige Spiralbohrer eingeschlossen.

Es wird als Vorteil angesehen, wenn in einer Weiterbildung des Arbeitsendes die Hauptschneiden in Bohrdrehrichtung in einem Versatzdrehwinkel gegenüber den Hauptschneiden voreilend angeordnet sind. Hierdurch können die Vorschneiden in Bohrdrehrichtung entsprechend früher in den Werkstoff eingreifen. Die optimale Größe des Versatzdrehwinkels hängt u.a. von der Höhe der Zentrierspitze bzw. von dem Abstand des freien Endes der Zentrierspitze von den radial außenliegenden Spitzen der Hauptschneiden ab, an denen die Hauptschneiden in Bohrdrehrichtung zu schneiden beginnen. Die optimale Höhe wird u.a. von dem Durchmesser des Spiralbohrers bzw. vom Durchmesser des Bohrerkernes sowie vom wegzuschneidenden Werkstoff bestimmt. Bei entsprechend hohem Abstand kann der Versatzdrehwinkel eventuell sogar negative Werte einnehmen, d.h., dass die Vorschneiden in Bohrdrehrichtung gegenüber den Hauptschneiden nacheilend angeordnet sind. In Hinsicht auf die Dimensionen eines üblichen Spiralbohrers wird jedoch ein Versatzdrehwinkel bevorzugt, der kleiner 40° ist. Die Vorschneiden und die Hauptschneiden des erfindungsgemäßen Spiralbohrers können eine in Bohrdrehrichtung hintere Anschlifffläche oder Freifläche aufweisen, wobei die Freifläche einer Hauptschneide die Freifläche einer benachbarten Vorschneide schneidet. Unter Vermeidung eines Absatzes oder dergleichen zwischen den Freiflächen einer Hauptschneide und einer benachbarten Vorschneide wird eine möglichst große Länge der Schneidkante der Vorschneide erzielt und somit der Uberstand der Zentrierspitze gegenüber der Hauptschneide maximal ausgenutzt. Ferner werden hierdurch die auftretenden mechanischen Kräfte in der Vorschneide optimal über die Freifläche der Hauptschneide in das Arbeitsende weitergeleitet. Zudem kann diese Geometrie verfahrenstechnisch leichter durch Einschleifen in das Arbeitsende hergestellt werden.

Die Zentrierspitze kann einen Spitzenwinkel von 60° bis 180° bevorzugt von 70° bis 100° und besonders bevorzugt von 75° bis 95° aufweisen. Der optimale Spitzenwinkel hängt hierbei u.a. von dem Durchmesser des Spiralbohrers bzw. von dem Durchmesser des Kerns des Spiralbohrers ab, durch den der Durchmesser der Basis der Zentrierspitze bestimmt wird. Je größer der Spitzenwinkel ist, desto länger kann die Schneidkante der Vorschneide ausgebildet sein.

Freiwinkel, Keilwinkel und Spanwinkel der Vorschneiden können dem Freiwinkel, Keilwinkel und Spanwinkel der Hauptschneiden angepasst sein.

Die Zentrierspitze kann zweckmäßigerweise die Spitzen der Vorschneiden wie die Spitzen der Hauptschneiden in Vorschubrichtung überragen, um hierdurch einen ersten exakten Einstich mit der Zentrierspitze und den von dem freien Ende der Zentrierspitze ausgehenden Vorschneiden an gewünschter Stelle in das zu Werkstück zu gewährleisten.

Der Spiralbohrer kann an seiner in Bohrdrehrichtung hintere Seitenfläche der Spanauswurfnut zu einer bekannten Führungsfase auslaufen, die die Führung und den Vorschub des Spiralbohrers in dem Bohrloch erleichtert. Ferner kann die Führungsfase in einer Weiterbildung am Arbeitsende zu einer Nebenschneide auslaufen, die den Vorschub weiter erleichtert. Zudem kann durch die Nebenschneiden die Innenwand des Bohrloches geglättet werden, wodurch die Reibung zwischen Spiralbohrer und Bohrloch zu Gunsten eines leichteren Vorschubes und einer geringeren Temperaturentwicklung im Bohrloch vermindert werden kann.

Die Spitzen der Vorschneiden können zudem zu inneren Vorschneidern mit jeweils mindestens einer umfänglich verlaufenden Schneidkante ausgebildet sein. Mit der umfänglich verlaufenden Schneidkante kann ein entsprechend umfänglich verlaufendes Einschneiden in die Werkstückoberfläche erzielt werden. Somit können die Werkstofffasern und -Partikel des Werkstückes entlang dieses umfänglichen Verlaufes geschnitten und leichter aus der Werkstoffmatrix herausgelöst werden, ohne dass ein weiteres Herauslösen der Werkstofffasern über den umfänglichen Verlauf hinaus ermöglicht wird. Die inneren Vorschneider können jeweils auch zwei umfänglich verlaufende Schneidkanten aufweisen, sodass die Werkstofffasern pro umlaufenden Vorschneider umfänglich zweifach und damit vollständiger durchtrennt werden können. Allgemein sind die radial außen liegenden Spitzen an den radial äußeren Enden der Hauptschneiden bzw. der Vorschneiden angeordnet.

Es kann ferner vorgesehen sein, dass sich die Hauptschneiden radial nach innen unter den Umfangradius erstrecken, auf dem die Spitzen der Vorschneiden angeordnet sind. Hiermit wird eine Vergrößerung der Gesamtschneidkanten des Bohrers, d.h. der Schneidkanten der Hauptschneiden sowie der Vorschneiden erzielt, indem ein radialer Überlappungsbereich der Schneiden am Übergang von der Hauptschneide zur Vorschneide ausgebildet wird. Hierbei kann konstruktionsbedingt eine Hinterschneidung auftreten, deren Tiefe u.a. von dem Versatzdrehwinkel abhängig ist, indem die Hauptschneiden und benachbarten Vorschneiden zueinander stehen.

Die Spitzen der Hauptschneiden können zu äußeren Vorschneidern mit mindestens einer umfänglich verlaufenden Schneidkante ausgebildet sein. Hierbei kann, wie bereits zuvor bei den inneren Vorschneidern der Vorschneiden geschildert, der Effekt auftreten, dass die Fasern des zu bohrenden Werkstoffes entlang eines durch die umfänglich verlaufenden Schneidkanten gebildeten Kreises geschnitten werden, wodurch verhindert wird, dass die Fasern über diesen Schnittverlauf hinaus nach außen hin ausgerissen werden.

Die äußeren Vorschneider können in einer Weiterbildung mit jeweils einer vorderen Schneidkante und einer hinteren Schneidkante ausgebildet sein, die auf dem gleichen Radius angeordnet sind. Dies kann konstruktiv beispielsweise dadurch erzielt werden, dass der Schneidrücken, d.h. die Mantelfläche der Wandung zwischen den Spanauswurfnuten, mit einer mittleren Nut versehen wird, die unter Ausbildung der vorderen und hinteren Schneidkante zum Arbeitsende des Spiralbohrers hin ausläuft. Durch diese Nut kann zudem eine Verringerung des Schneidrückens, mit dem der Spiralbohrer im Bohrkanal anliegt, und damit der mit Drehung des Spiralbohrers erzeugten Reibung erzielt werden. Ferner können hierdurch zwei Führungsfasen, eine an der in Bohrdrehrichtung hintere Seitenfläche der Spanauswurf und eine an der in Bohrdrehrichtung vorderen Seitenfläche der Spanauswurf angeordnete Führungsfase, in den Spiralbohrer eingearbeitet werden.

Der Spiralbohrer kann eine bekannte, radial nach innen gerichtete Profilverjüngung an Führungsfase und Schneidrücken in seinem mit der Spanauswurfnut versehenen Abschnitt aufweisen, die am Arbeitsende beginnt und sich bis zum Anschlussende fortsetzen kann. Hierdurch wird die Gefahr eines möglicherweise auftretenden Taumelns oder Festsetzens des Spiralbohrers im Bohrloch vermindert.

Die Spanauswurfnuten können rechts- oder linksdrehend im Spiralbohrer angeordnet sein. Hierbei können sich beispielsweise bei gleichzeitiger Verwendung zweier Spiralbohrer mit rechts- bzw. linksdrehender Spanauswurfnut die durch das Bohren auf das Werkstück ausgeübten, entgegengesetzten Drehmomente gegenseitig aufheben.

Die erfindungsgemäße Ausbildung der Zentrierspitze mit den Vorschneiden kann auch bei anderen üblichen Spiralbohren mit einer Zentrierspitze wie beispielsweise bei einem Schlangenbohrer, dessen Zentrierspitze jedoch nicht mit dem üblichen Einzugsgewinde, sondern mit den Vorschneiden versehen ist, oder bei einem Forstner-Bohrer eingesetzt werden.

Das Arbeitsende des Spiralbohrers kann zusätzlich mit einem Hartmetalleinsatz versehen sein, durch den zumindest die Hauptschneiden gebildet werden. Hierbei kommen als Hartmetalle übliche Sintercarbide oder dergleichen in Betracht.

Der Bohrkörper kann aus einem üblichen Spiralbohrerwerkstoff wie einem Chrom-Vanadium-Stahl (CV-Stahl) oder einem CV-Silberstahl bestehen.

Die Erfindung wird anhand eines Ausführungsbeispiels mit einer zugehörigen Zeichnung näher erläutert. In der Zeichnung zeigen:
- Fig. 1: eine Seitenansicht des erfindungsgemäßen Spiralbohrers, der hier als Holzspiralbohrer ausgebildet ist.
- Fig. 2: eine Seitenansicht des Arbeitsendes, die gegenüber der in Fig.1 dargestellten Ansicht um einen Drehwinkel von etwa 90° versetzt ist, und
- Fig. 3: im vergrößerten Maßstab eine Draufsicht auf das Arbeitsende des Holzspiralbohrers in Richtung des Pfeils III in Fig.2.

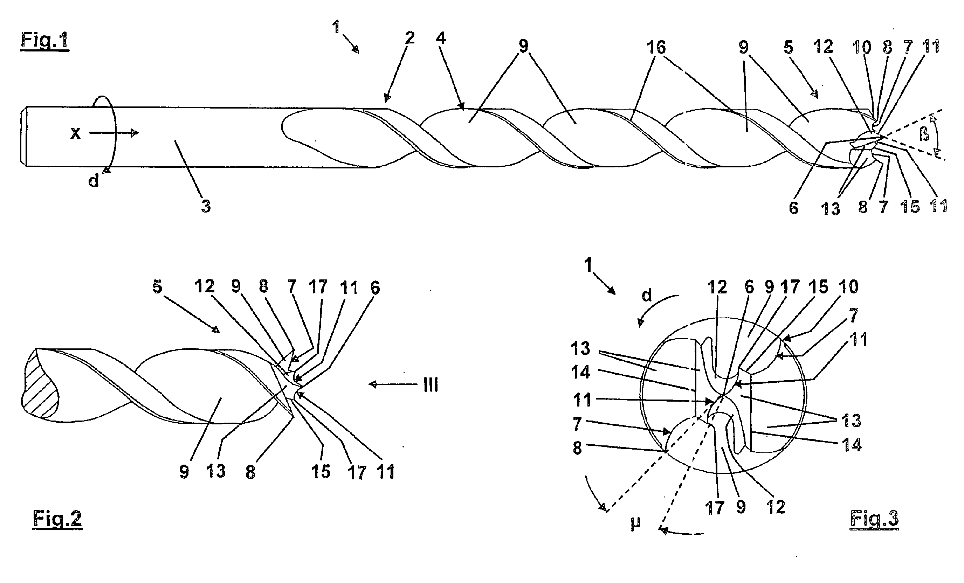

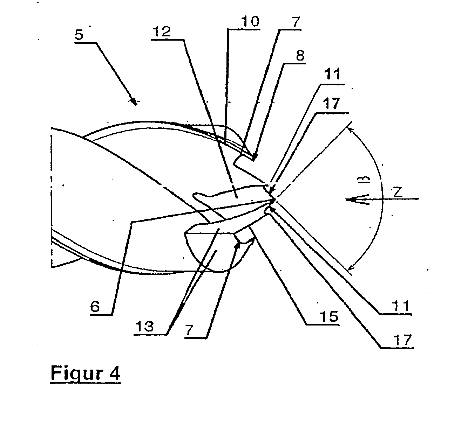

In den Figuren 1 bis 3 ist ein erfindungsgemäßer Spiralbohrer, der in diesem Ausführungsbeispiel als Holzspiralbohrer 1 ausgebildet ist, in verschiedenen Ansichten dargestellt. Fig.1 zeigt den Holzspiralbohrer 1 in einer Seitenansicht. Hierbei weist der Holzspiralbohrer 1 einen länglichen Bohrkörper 2 mit einem Anschlussende zur Befestigung des Holzspiralbohrers 1 beispielsweise in eine hier nicht dargestellte Bohrmaschine, ein Mittelteil 4 und ein Arbeitsende 5 mit einer Zentrierspitze 6 auf. Die Zentrierspitze 6 ist mit zwei etwa quer zur Längsachse des Bohrkörpers 2 und bezüglich der Längsachse einander gegenüberliegend verlaufenden Hauptschneiden 7 versehen. Wie insbesondere in Figur 2, eine gegenüber Figur 1 um einen Drehwinkel von etwa 90° versetzte Seitenansicht des Arbeitsendes 5 des Holzspiralbohrers 1, deutlich ablesbar, sind die Hauptschneiden 7 jeweils mit einer radial außen liegenden Spitze 8 versehen. Diese Spitzen 8 stehen in Vorschubrichtung x des Holzspiralbohrers 1 vor. Insbesondere in Figur 3, eine Draufsicht auf das Arbeitsende in Richtung des in Figur 2 eingezeichneten Pfeils III, gezeigt, schließt sich an jeder Hauptschneide 7 eine Spanauswurfnut 9 an, die wendelförmig um die Längsachse des Bohrkörpers 2 über das Mittelteil 4 verläuft. Ferner ist die in Bohrdrehrichtung d hintere Seitenfläche der Spanauswurfnut 9 zu einer Führungsfase 10 zur Führung des Holzspiralbohrers 1 in dem hier nicht gezeigtem Bohrloch ausgebildet. Die Führungsfase 10 läuft im Arbeitsende 5 zu einer Nebenschneide 16 aus.

Die Zentrierspitze 6 weist zwei Vorschneiden 11 auf. Die Vorschneiden 11 gehen vom freien Ende der Zentrierspitze 6 aus und verlaufen etwa quer zur Längsachse des Bohrkörpers 2 sowie bezüglich der Längsachse einander gegenüberliegend, wie insbesondere Fig. 3 entnehmbar, schließt sich an jede Vorschneide 11 eine Vorspanauswurfnut 12 an, die in die Spanauswurfnut 9 übergeht.

Bei einem herkömmlichen Holzspiralbohrer, der eine Zentrierspitze ohne eingearbeitete Vorschneiden aufweist, wird das Material erst dann geschnitten, wenn die in Vorschubrichtung von dem freien Ende der Zentrierspitze beabstandeten Hauptschneiden in die Werkstückoberfläche eindringen, sodass das abzutragende Material im Bereich zwischen Zentrierspitze und Hauptschneide während des Vorschubes lediglich nach vorne gedrückt und gestaucht wird und ein entsprechend hoher Bohrdruck im Bohrloch entsteht. Bei dem erfindungsgemäßen Holzspiralbohrer wird hingegen unmittelbar mit dem Ansetzen der Zentrierspitze 6 auf das hier nicht dargestellte, zu bohrende Werkstück begonnen, durch die vom freien Ende der Zentrierspitze 6 ausgehenden Vorschneiden 11 das auszubohrende Material abzuschneiden, welches dann entgegen der Vorschubrichtung x über die Vorspanauswurfnut 12 in die Spanauswurfnut 9 von der Zentrierspitze 6 wegtransportiert wird. Hierdurch wird eine erste Verminderung des Bohrdruckes erzielt der durch das Eindringen des Holzspiralbohrers 1 in das hier nicht dargestellte Bohrloch aufgebaut wird und der insbesondere für das Abplatzen, Ausreißen, Absplittern u.s.w. von Material an der Austrittsseite des Bohrloches verantwortlich ist.

Wenn die in Vorschubrichtung x nachfolgenden Hauptschneiden 7 in das hier nicht dargestellte Werkstück einschneiden, ist bereits durch die Vorschneiden 11 eine entsprechende, hier nicht dargestellte Vorbohrung durch die Vorschneide 11 eingebracht, in die der durch die Hauptschneiden 7 aufgebaute Bohrdruck entspannen kann. Ferner greifen die Hauptschneiden 7, die in radialer Richtung an die Vorschneiden 11 anschließen, abhängig von der genauen Gestaltung des Überganges von der Vorschneide 11 zur Hauptschneide 7 direkt an den äußeren Radius der hier nicht dargestellten Vorbohrung an, sodass die Hauptschneiden 7, unmittelbar an den Außenradius der Vorbohrung anschließend, das Material wegschneiden, das durch die Spanauswurfnut 9 entgegen der Vorschubrichtung x wegtransportiert wird. Somit kann im wesentlichen kein Druckaufbau durch nicht abgeschnittenes Material in dem Grund des Bohrloches entstehen. Falls jedoch geringfügige Reste an nicht unmittelbar geschnittenem Material im Bohrgrund vorhanden sein sollten, welches durch den Vorschub in Vorschubrichtung x gepresst wird und somit für einen entsprechend geringfügigen Druckaufbau im Bohrgrund sorgt, so kann dieses Material zumindest teilweise in die durch die Vorschneiden eingebrachte Vorbohrung geschoben und der Bohrdruck entsprechend entspannt werden. Hierbei können die Geometrien des Arbeitsendes 5 mit dem radialen Übergang von der Hauptschneide 7 zu der Vorschneide 11 entscheidend sein, auf welche weiter unten eingegangen wird.

In dem hier vorgestellten Ausführungsbeispiel weist die Zentrierspitze 6 einen Spitzenwinkel β auf, der, wie in Fig. 2 in etwa ablesbar, ungefähr 80° beträgt. Selbstverständlich sind auch andere Spitzenwinkel in einem Bereich von ca. 60° bis ca. 140°, bevorzugt von 70° bis 100° und besonders bevorzugt von 75° bis 95° denkbar. Die Größe des Spitzenwinkels hängt u.a. von der Höhe der Zentrierspitze 6, in der die Zentrierspitze 6 die Hauptschneiden 7 überragt, sowie von dem Durchmesser des Kerns des Holzspiralbohrers 1 ab. Zur Zentrierung einer Bohrung überragt die Zentrierspitze 6 die radial außen liegende Spitzen 8 der Hauptschneiden 7 und der Vorschneiden 11.

In Fig. 3, einer Draufsicht auf das Arbeitsende 5 gemäß der Richtung des Pfeils III in Figur 2, ist ablesbar, dass die Vorschneiden 11 gegenüber den Hauptschneiden 7 in Bohrdrehrichtung d in einem Versatzdrehwinkel µ voreilend angeordnet sind, wobei der Versatzdrehwinkel µ im hier gewählten Ausführungsbeispiel kleiner 40° ist. Hierdurch schneidet die Vorschneide 11 in Bohrdrehrichtung d entsprechend früher in das Material ein. Ein optimaler Versatzdrehwinkel µ hängt u.a. von der Höhe der Zentrierspitze 6 gegenüber den Hauptschneiden 7 ab. Hierbei soll zumindest an der Stelle, an der die Hauptschneide 7 im Zuge des Vorschubes des Holzspiralbohrers 1 in das wegzubohrende Material eingreift, durch die Vorschneide 11 bereits Material weggeschnitten und über die Vorspanauswurfnut 12 und die Spanauswurfnut 9 wegtransportiert worden sein.

Wie in Fig. 3 weiterhin ersichtlich, weisen die Vorschneiden 11 und die Hauptschneiden 7 jeweils eine in Bohrdrehrichtung d hintere Anschlifffläche oder Freifläche 13 auf. Hierbei verläuft die Freifläche 13 einer Hauptschneide 7 unter Ausbildung einer Kante 14 gegen die Freifläche 13 der dazu benachbarten Vorschneide 11, ohne einen Absatz oder dergleichen dazwischen zu bilden. Hierdurch wird die verfügbare Höhe der Zentrierspitze 6, mit der die Zentrierspitze 6 gegenüber dem Innenradius der Hauptschneide 7 vorsteht, weitgehend zur Ausbildung der Vorschneiden 11 genutzt.

Wie insbesondere in Fig. 2 deutlich ablesbar, sind die Vorschneiden 11, ähnlich wie die Hauptschneiden 7, jeweils mit einer radial außen liegenden Spitze 17 versehen, die in Vorschubrichtung x des Holzspiralbohrers 1 vorsteht, wobei in dem hier vorgestellten Ausführungsbeispiel das Vorstehen der radial außen liegenden Spitzen 17 verhältnismäßig gering ist. Es ist vorstellbar, dass diese Spitzen weiter als hier gezeigt vorstehen.

Wie hier ebenfalls nicht weiter dargestellt, können die Spitzen von Hauptschneiden und/oder Vorschneiden zusätzlich als Vorschneider mit jeweils mindestens einer umfänglich verlaufenden Schneidkante ausgebildet sein. Die Vorschneidern schneiden entsprechend ihrer radialen Positionierung bezüglich der Zentrierspitze einen umfänglichen Kreis in das Material, sodass ein Ausreißen von Fasern oder dergleichen des wegzubohrenden Materials über den Kreis hinaus vermieden werden kann.

Der Profilverlauf der in Fig. 2 gezeigten Seitenansicht des Arbeitsendes zeigt, dass im Übergang von der Vorschneide 11 zur Hauptschneide 7 ein Absatz 15 ausgebildet ist und dass die Hauptschneide 7 in radialer Richtung nahezu unmittelbar an die Vorschneide 11 anschließt. Denkbar, aber nicht in dem gezeigten Ausführungsbeispiel verwirklicht, ist, dass die Hauptschneide unter Ausbildung einer Hinterschneidung unter die Vorschneide 11 verläuft, wodurch ein Überlappungsbereich von Hauptschneide 7 und Vorschneide 11 entsteht, durch den ein exakteres und vollständigeres Abschneiden von Material in dem Übergangsbereich erzielt werden kann.

Wie ebenfalls hier nicht dargestellt, können die Vorschneider der Hauptschneiden mit jeweils einer in Bohrdrehrichtung vorderen Schneidkante und einer hinteren Schneidkante versehen sein, die auf dem gleichen Radius angeordnet sind. Hierdurch kann ein noch schärferes Einschneiden der Vorschneiden in das Material erzielt werden. Die Ausbildung der vorderen und der hinteren Schneidkanten kann durch Ausbildung einer hier nicht dargestellten Nut erfolgen, die wendelförmig um die Längsachse des Bohrkörpers zwischen den Spanausfuhrnuten verläuft und in das Arbeitsende einmündet. Hierdurch wird als zusätzlicher Effekt die Reibungsfläche, mit der der Holzspiralbohrer seitlich gegen die Innenwandung der Bohrung anliegt, verringert und somit ein leichterer Vorschub ermöglicht. Insbesondere bei Holzspiralbohrern mit größeren Durchmesser können auch die inneren Vorschneider der Vorschneiden eine vordere und eine hintere Schneidkante aufweisen.

### Bezugszeichenliste

- 1: Holzspiralbohrer
- 2: Bohrkörper
- 3: Anschlussende
- 4: Mittelteil
- 5: Arbeitsende
- 6: Zentrierspitze
- 7: Hauptschneide
- 8: Spitze
- 9: Spanauswurfnut
- 10: Führungsfase
- 11: Vorschneide
- 12: Vorspanauswurfnut
- 13: Freifläche
- 14: Kante
- 15: Absatz
- 16: Nebenschneide
- 17: Spitze
- x: Vorschubrichtung
- d: Bohrdrehrichtung
- β: Spitzenwinkel
- µ: Versatzdrehwinkel

## Patentansprüche

1. Spiralbohrer, insbesondere für weiche Werkstoffe wie Holz, Kunststoff, weiche Metalle, Verbundwerkstoffe und dergleichen, mit einem länglichen Bohrkörper (2), der ein Anschlussende (3), ein Mittelteil (4) und ein Arbeitsende (5) mit einer Zentrierspitze (6) sowie mindestens zwei etwa quer zur Längsachse des Bohrkörpers (2) und bezüglich der Längsachse einander gegenüber liegend verlaufende Hauptschneiden (7) aufweist, wobei die Hauptschneiden (7) jeweils mit einer radial außenliegenden Spitze (8) versehen sind, die in Vorschubrichtung (x) des Spiralbohrers vorsteht, sich an jede Hauptschneide (7) eine Spanauswurfnut (9) anschließt, die wendelförmig um die Längsachse des Bohrkörpers (2) über zumindest einen Abschnitt des Mittelteils (4) verläuft, die Zentrierspitze (6) mindestens zwei Vorschneiden (11) aufweist, die Vorschneiden (11) vom freien Ende der Zentrierspitze (6) ausgehen und etwa quer zur Längsachse des Bohrkörpers (2) sowie bezüglich der Längsachse einander gegenüber liegend verlaufen, **dadurch gekennzeichnet**, da s s die Vorschneiden (11) jeweils mit einer radial außenliegenden Spitze (17) versehen sind, die in Vorschubrichtung (x) des Spiralbohrers (1) vorsteht, und dass sich an jede Vorschneide (11) eine Vorspanauswurfnut (12) anschließt, die in die Spanauswurfnut (9) übergeht.

2. Spiralbohrer nach Anspruch 1, **dadurch gekennzeichnet, dass** zwei Hauptschneiden (7) und zwei Vorschneiden (11) vorgesehen sind.

3. Spiralbohrer nach Anspruch 1 oder 2, **dadurch gekennzeichnet, dass** die Vorschneiden (11) in Bohrdrehrichtung (d) in einem Versatzdrehwinkel (µ) gegenüber den Hauptschneiden (7) voreilend angeordnet sind.

4. Spiralbohrer nach Anspruch 3, **dadurch gekennzeichnet, dass** der Versatzdrehwinkel (µ) kleiner 40° ist.

5. Spiralbohrer nach einem der Ansprüche 1 bis 4, **dadurch gekennzeichnet, dass** die Vorschneiden (11) und die Hauptschneiden (7) eine in Bohrdrehrichtung (d) hintere Anschlifffläche oder Freifläche (13) aufweisen, wobei die Freifläche (13) einer Hauptschneide (7) die Freifläche (13) einer benachbarten Vorschneide (11) schneidet.

6. Spiralbohrer nach einem der Ansprüche 1 bis 5, **dadurch gekennzeichnet, dass** die Zentrierspitze (6) einen Spitzenwinkel (β) von 60° bis 140° aufweist.

7. Spiralbohrer nach Anspruch 6, **dadurch gekennzeichnet, dass** der Spitzenwinkel (β) 70° bis 100° beträgt.

8. Spiralbohrer nach Anspruch 6 oder 7, **dadurch gekennzeichnet, dass** der Spitzenwinkel (β) 75° bis 95° beträgt.

9. Spiralbohrer nach einem der Ansprüche 1 bis 8, **dadurch gekennzeichnet, dass** die Spitzen (17) der Vorschneiden (11) zu inneren Vorschneidern mit jeweils mindestens einer umfänglich verlaufenden Schneidkante ausgebildet sind.

10. Spiralbohrer nach einem der Ansprüche 1 bis 9, **dadurch gekennzeichnet, dass** sich die Hauptschneiden (7) radial nach innen unter den Umfangradius erstrecken, auf dem die Spitzen (17) der Vorschneiden (11) angeordnet sind.

11. Spiralbohrer nach einem der Ansprüche 1 bis 10, **dadurch gekennzeichnet, dass** die Spitzen (8) der Hauptschneiden (7) zu äußeren Vorschneidern mit jeweils mindestens einer umfänglich verlaufenden Schneidkante ausgebildet sind.

12. Spiralbohrer nach Anspruch 11, **dadurch gekennzeichnet, dass** die äußeren Vorschneider in Bohrdrehrichtung (d) mit jeweils einer vorderen Schneidkante und einer hinteren Schneidkante ausgebildet sind, die auf dem gleichen Radius angeordnet sind.

13. Spiralbohrer nach einem der Ansprüche 1 bis 12, **dadurch gekennzeichnet, dass** die in Bohrdrehrichtung hintere Seitenfläche der Spanauswurfnut (9) zu einer Führungsfase (10) ausläuft.

## Claims

1. Twist drill, particularly for soft materials, such as wood, plastic, soft metals, composite materials and similar, with an elongated drill body (2) displaying a connecting end (3), a middle part (4), and a working end (5) with a center point (6), in addition to at least two main cutting edges (7) that run roughly transversely to the longitudinal axis of the drill body (2) and lie opposite one another in relation to the longitudinal axis, where the main cutting edges (7) are each provided with a radially outer tip (8), which projects in the feed direction (x) of the twist drill, a chip removal flute (9) follows on from each main cutting edge (7), spiraling about the longitudinal axis of the drill body (2) over at least a section of the middle part (4), the center point (6) displays at least two pilot cutting edges (11), and the pilot cutting edges (11) start from the free end of the center point (6), run roughly transversely to the longitudinal axis of the drill body (2) and lie opposite one another in relation to the longitudinal axis, **characterized in that** the pilot cutting edges (11) are each provided with a radially outer tip (17), projecting in the feed direction (x) of the twist drill (1), and **in that** a pilot chip removal flute (12) follows on from each pilot cutting edge (11), transitioning into the chip removal flute (9).

2. Twist drill according to Claim 1, **characterized in that** two main cutting edges (7) and two pilot cutting edges (11) are provided.

3. Twist drill according to Claim 1 or 2, **characterized in that** the pilot cutting edges (11) are arranged in leading fashion at an offset rotational angle (µ) relative to the main cutting edges (7) in the direction of rotation for drilling (d).

4. Twist drill according to Claim 3, **characterized in that** the offset rotational angle (µ) is smaller than 40°.

5. Twist drill according to one of Claims 1 to 4, **characterized in that** the pilot cutting edges (11) and the main cutting edges (7) display a trailing drill point surface or flank (13) in the direction of rotation for drilling (d), where the flank (13) of a main cutting edge (7) intersects the flank (13) of an adjacent pilot cutting edge (11).

6. Twist drill according to one of Claims 1 to 5, **characterized in that** the center point (6) displays an angle of point (β) of 60° to 140°.

7. Twist drill according to Claim 6, **characterized in that** the angle of point (β) is 70° to 100°.

8. Twist drill according to Claim 6 or 7, **characterized in that** the angle of point (β) is 75° to 95°.

9. Twist drill according to one of Claims 1 to 8, **characterized in that** the tips (17) of the pilot cutting edges (11) are designed as inner pilot cutters, each of which has at least one circumferential cutting edge.

10. Twist drill according to one of Claims 1 to 9, **characterized in that** the main cutting edges (7) extend radially inwards, under the circumferential radius on which the tips (17) of the pilot cutting edges (11) are located.

11. Twist drill according to one of Claims 1 to 10, **characterized in that** the tips (8) of the main cutting edges (7) are designed as outer pilot cutters, each with at least one circumferential cutting edge.

12. Twist drill according to Claim 11, **characterized in that** the outer pilot cutters are designed with one leading cutting edge and one trailing cutting edge in the direction of rotation for drilling (d), the two being located on the same radius.

13. Twist drill according to one of Claims 1 to 12, **characterized in that** the trailing side surface of the chip removal flute (9) in the direction of rotation for drilling runs out into a heel (10).

## Revendications

1. Foret hélicoïdal, en particulier pour des matériaux tendres comme le bois, le plastique, les métaux doux, matériaux composites et équivalent, avec un corps de perçage allongé (2) qui présente une extrémité de raccord (3), une partie centrale (4) et une extrémité de travail (5) avec une pointe de centrage (6) ainsi qu'au moins deux lames principales (7) qui sont à peu près transversales par rapport à l'axe longitudinal du corps de perçage (2) et situées l'une en face de l'autre par rapport à l'axe longitudinal, les lames principales (7) étant respectivement pourvues d'une pointe (8) située radialement à l'extérieur qui fait saillie dans le sens d'avancement (x) du foret hélicoïdal, une rainure d'éjection de copeaux (9) se rattachant à chaque lame principale (7), rainure qui est hélicoïdale autour de l'axe longitudinal du corps de perçage (2) sur au moins une section de la partie centrale (4), la pointe de centrage (6) ayant au moins deux lames d'attaque (11), les lames d'attaque (11) partant de l'extrémité libre de la pointe de centrage (6) et étant à peu près transversales par rapport à l'axe longitudinal du corps de perçage (2) ainsi que situées l'une en face de l'autre par rapport à l'axe longitudinal, **caractérisé en ce que** les lames d'attaque (11) sont pourvues respectivement d'une pointe située radialement à l'extérieur (17) qui fait saillie dans le sens d'avancement (x) du foret hélicoïdal (1) et qu'une rainure d'amorce d'éjection des copeaux (12) se rattache à chaque lame d'attaque (11), rainure qui se transforme en rainure d'éjection des copeaux (9).

2. Foret hélicoïdal selon la revendication 1, **caractérisé en ce que** deux lames principales (7) et deux lames d'attaque (11) sont prévues.

3. Foret hélicoïdal selon la revendication 1 ou 2, **caractérisé en ce que** les lames d'attaque (11) sont placées en avant des lames principales (7) dans le sens de rotation de perçage (d) dans un angle de rotation de décalage (µ).

4. Foret hélicoïdal selon la revendication 3, **caractérisé en ce que** l'angle de rotation de décalage (µ) est inférieur à 40°.

5. Foret hélicoïdal selon l'une des revendications 1 à 4, **caractérisé en ce que** les lames d'attaque (11) et les lames principales (7) ont une surface polie ou une surface libre (13) postérieure dans le sens de rotation de perçage (d), la surface libre (13) d'une lame principale (7) coupant la surface libre (13) d'une lame d'attaque voisine (11).

6. Foret hélicoïdal selon l'une des revendications 1 à 5, **caractérisé en ce que** la pointe de centrage (6) a un angle aigu (β) de 60° à 140°.

7. Foret hélicoïdal selon la revendication 6, **caractérisé en ce que** l'angle obtus (β) est de 70° à 100°.

8. Foret hélicoïdal selon la revendication 6 ou 7, **caractérisé en ce que** l'angle obtus (β) est de 75° à 95°.

9. Foret hélicoïdal selon l'une des revendications 1 à 8, **caractérisé en ce que** les pointes (17) des lames d'attaque (11) sont configurées vers des tarauds intérieurs avec respectivement au moins une arête de coupe périphérique.

10. Foret hélicoïdal selon l'une des revendications 1 à 9, **caractérisé en ce que** les lames principales (7) s'étendent radialement vers l'intérieur sous le rayon périphérique sur lequel les pointes (17) des lames d'attaque (11) sont placées.

11. Foret hélicoïdal selon l'une des revendications 1 à 10, **caractérisé en ce que** les pointes (8) des lames principales (7) sont configurées vers des tarauds extérieurs avec respectivement au moins une arête de coupe périphérique.

12. Foret hélicoïdal selon la revendication 11, **caractérisé en ce que** les tarauds extérieurs sont configurés dans les sens de rotation de perçage (d) avec respectivement une arête de coupe antérieure et une arête de coupe postérieure qui sont placées sur le même rayon.

13. Foret hélicoïdal selon l'une des revendications 1 à 12, **caractérisé en ce que** la face latérale postérieure dans le sens de rotation de perçage de la rainure d'éjection de copeaux (9) se termine en un chanfrein de guidage (10).
